Europäisches Patentamt

(19) **European Patent Office**

Office européen des brevets

(11) Veröffentlichungsnummer: **0 037 508**
**B1**

(12) **EUROPÄISCHE PATENTSCHRIFT**

(45) Veröffentlichungstag der Patentschrift:
**04.05.83**

(21) Anmeldenummer: **81102193.0**

(22) Anmeldetag: **24.03.81**

(51) Int. Cl.³: **C 23 F 15/00, C 01 B 17/88**

(54) Verfahren zur Verminderung der Korrosion an Pauling-Kesseln.

(30) Priorität: **05.04.80 DE 3013278**

(43) Veröffentlichungstag der Anmeldung:
**14.10.81 Patentblatt 81/41**

(45) Bekanntmachung des Hinweises auf die Patenterteilung:
**04.05.83 Patentblatt 83/18**

(84) Benannte Vertragsstaaten:
**BE CH DE FR GB IT LI NL SE**

(56) Entgegenhaltungen:
**DE-B-1 007 741**
**DE-C-299 774**
**DE-C-357 593**

(73) Patentinhaber: **BAYER AG, Zentralbereich Patente, Marken und Lizenzen, D-5090 Leverkusen 1, Bayerwerk (DE)**

(72) Erfinder: **Holtschmidt, Norbert, Dr., Günsterröderstrasse 10, D-3436 Hessisch Lichtenau (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**0 037 508**

## Verfahren zur Verminderung der Korrosion an Pauling-Kesseln

Die vorliegende Erfindung betrifft ein Verfahren zur Verminderung der Korrosion an Pauling-Kesseln durch möglichst gleichmäßige Beheizung der Kessel, insbesondere im Bereich oberhalb und unterhalb ihres Auflageflansches.

Bei vielen industriellen Verfahren fällt mehr oder weniger mit anderen Substanzen verunreinigte Schwefelsäure in den unterschiedlichsten Konzentrationen an. Diese Säuren müssen meistens vor einer Wiederverwertung aufgearbeitet, d. h. aufkonzentriert und gegebenenfalls gereinigt werden.

In dem bekannten Pauling-Verfahren (vgl. Ullmann, Enzyklopädie der technischen Chemie, 3. Aufl., 15. Band, 1964, S. 443) wird die Schwefelsäure in von außen beheizten Gußkesseln unter Normaldruck aufkonzentriert und gegebenenfalls unter Zusatz von Salpetersäure gereinigt.

Dieses Verfahren ist technisch relativ einfach durchführbar, besitzt jedoch wesentliche Nachteile. Bei normalem Betrieb bildet sich nämlich an der Kesselinnenwand in Höhe des Flüssigkeitsspiegels ein Korrosionsring aus. Die Kesselwand wird also allmählich immer dünner, so daß sie regelmäßig inspiziert werden muß. Ferner muß der Kessel nach einer Betriebsdauer von normalerweise ca. 2 bis 3 Jahren gegen einen neuen ausgetauscht werden.

Überraschenderweise wurde nun gefunden, daß die erhöhte Korrosion wesentlich dadurch herabgesetzt werden kann, wenn der Kessel in Höhe seines Auflageflansches und damit in Höhe des Flüssigkeitsspiegels möglichst gleichmäßig beheizt wird.

Gegenstand der vorliegenden Erfindung ist daher ein Verfahren zur Verminderung der Korrosion an Pauling-Kesseln, welches dadurch gekennzeichnet ist, daß der Kessel im Bereich seines Auflageflansches gleichmäßig beheizt wird.

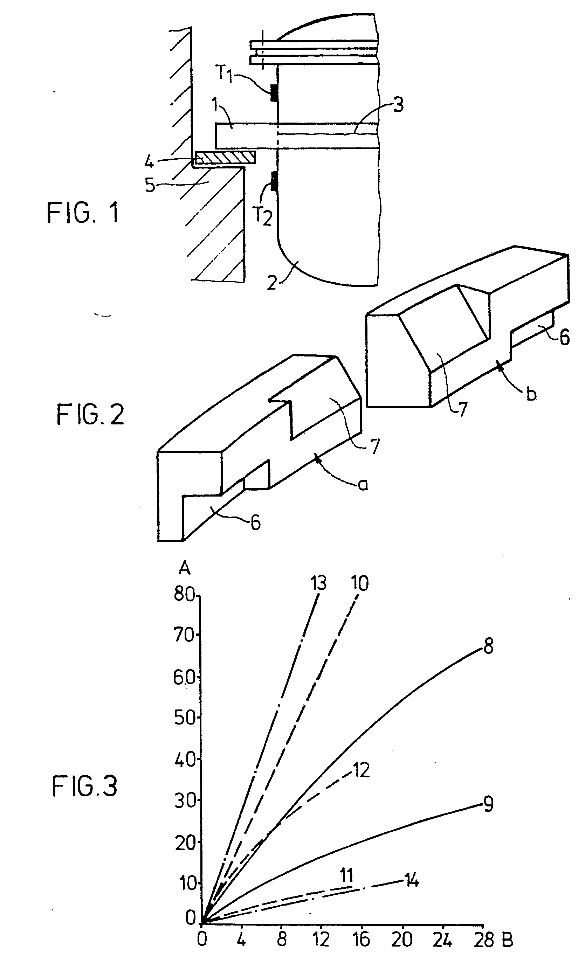

Erfindungsgemäß wird der Kessel also so beheizt, daß die Temperatur der Kesselwand oberhalb des Auflageflansches und die Temperatur der Kesselwand unterhalb des Auflageflansches möglichst gleich sind. Dies wird in der Figur 1 schematisch durch $T_1$ und $T_2$ verdeutlicht.

Erfindungsgemäß werden die Heiz- bzw. Rauchgase mittels geeigneter Einbauten, wie z. B. Leitblechen in Form eines zweigeteilten Gußringes mit etwas größerem Innendurchmesser als der Kessel und deutlich geringerem als die Flanschaußenkante oder besonders geformten Steinen, vgl. Abb. 2a und b, in das zur Unterstützung des Gußkessels dienende Mauerwerk so geführt, daß sie auch direkt auf die Kesselwand zwischen Auflageflansch und Deckelflansch in ihrem gesamten Bereich auftreffen. Durch diese spezielle Führung der Heizgase werden die bisher bestehenden Temperaturdifferenzen vermieden und eine geringfügigere Temperaturerhöhung oberhalb des Kesselauflageflansches erreicht. Den gleichen Zweck wie Leitbleche oder speziell geformte Steine erfüllt z. B. auch ein Gußring, der in das Mauerwerk eingelegt wird oder auch ein mit einer »Nase« versehener Formstein. Prinzipiell ist es auch möglich, den rund um den Kessel verlaufenden Auflageflansch mit entsprechenden Aussparungen zu versehen, dies beinhaltet jedoch gußtechnische Fertigungsprobleme.

Die Temperaturabhängigkeit des Angriffs von konzentrierter Schwefelsäure auf Grauguß im Bereich von ca. 15 bis ca. 300° C ist bekannt (DECHEMA-Werkstoff-Tabelle, Chemische Beständigkeit, Schwefelsäure, Dez. 1969). Nach dieser Tabelle wird ein Korrosionsmaximum bei ca. 215° C durchlaufen. Oberhalb einer Temperatur von ca. 220° C ist die beschriebene Korrosionsabnahme so gering, daß bei Extrapolation der Literaturwerte auf den Kochpunkt konzentrierter Schwefelsäure keine erhebliche Verbesserung des Konzentrationsverhaltens zu erwarten war.

Um so überraschender war es desahlb, daß durch das erfindungsgemäße Verfahren ein diesbezüglicher technisch bedeutender Fortschritt erreicht und die durchschnittliche Standzeit der Gußkessel mehr als verdoppelt werden konnte.

Figur 1 zeigt schematisch einen Gußkessel mit großem Auflageflansch, Figur 2a und b Formsteine und Figur 3 das Korrosionsverhalten gemäß den Werten der Beispiele.

Im einzelnen haben die Zahlen folgende Bedeutung.

Figur 1:

| | | |
|---|---|---|
| 1 | = | Auflageflansch |
| 2 | = | Kessel |
| 3 | = | Flüssigkeitsspiegel |
| 4 | = | Unterlage, z. B. Gußring |
| 5 | = | Mauerwerk |

Figur 2:

| | | |
|---|---|---|
| a, b | = | Formsteine |
| 6 | = | Rauchgaseintritt |
| 7 | = | Rauchgasaustritt |

2

Es besteht für das Heizgas z. B. die Möglichkeit, die Unterlage 4, die entsprechend ausgebildet sein muß, zu durchdringen und über darüber angeordnete Formsteine in den Bereich $T_1$ zu gelangen. Andererseits können die Steine bei gleicher Ausführung auch eingesetzt werden, wenn ein Rauchgasdurchtritt durch das Mauerwerk 5 ermöglicht wird.

Figur 3:

A   =   Rillentiefe in mm
B   =   Betriebszeit in Monaten
9—14:   Werte der Beispiele 1—3

Das vorliegende Verfahren soll durch die folgenden Beispiele noch näher erläutert werden:
Die in den Beispielen erwähnten PAULING-Kessel aus Grauguß haben folgende Abmessungen:

| | |
|---|---|
| Innendurchmesser | 3200 mm |
| Höhe | 2400 mm |
| Äußerer Flanschdurchmesser | 3560 mm |
| Nennvolumen | 12 m³ |
| Wandstärke oben | 70—80 mm |
| Wandstärke unten | 65 mm |

## Beispiel 1

Ein mit über 96%iger, bei schwachem Unterdruck siedender Schwefelsäure gefüllter Kochkessel wurde gemäß dem PAULING-Verfahren mit 72%iger gebrauchter Schwefelsäure aus Nitrierprozessen beaufschlagt. Bei fälligen Inspektionen wurde die auf Höhe des Säurespiegels ausgebildete Rille in ihrer Tiefe gemessen.
Dabei ergaben sich folgende Meßwerte:

| Laufzeit | 205 | 348 | 420 | 481 | 541 | 729 Tage |
|---|---|---|---|---|---|---|
| Rillentiefe | 20 | 35 | 42 | 45 | 48 | 60 mm |

Nach Ausbau dieses Kessels wurde die Ausmauerung mit Formsteinen entsprechend Abb. 2 versehen und ein neuer Kessel gleicher Abmessungen eingebaut und unter gleichen Bedingungen betrieben. Die Vermessung der Rillentiefe ergab hier die Werte:

| Laufzeit | 105 | 185 | 255 | 371 | 483 | 563 | 677 | 734 | 830 Tage |
|---|---|---|---|---|---|---|---|---|---|
| Rillentiefe | 8 | 8 | 15 | 20 | 20 | 22 | 26 | 27,5 mm | |

Der Kessel ist noch in Betrieb.
Diese Ergebnisse werden durch die Kurven (8) und (9) in Abb. 3 graphisch dargestellt.

## Beispiel 2

Unter vergleichbaren PAULING-Bedingungen wurden zwei Kessel nacheinander in derselben Anlage betrieben, wobei der erste die übliche, der zweite die erfindungsgemäße Rauchgasführung aufwies. In Abhängigkeit von der Betriebszeit ergaben sich folgende Rillentiefen:

| übliche Rauchgasführung | Laufzeit | 128 | 221 | 299 | 431 Tage |
|---|---|---|---|---|---|
| | Rillentiefe | 20 | 45 | 50 | 75 mm |
| verbesserte Rauchgasführung | Laufzeit | 78 | 210 | 309 | 425 Tage |
| | Rillentiefe | 3 | 5 | 5 | 7,5 mm |
| | Kessel in Betrieb | | | | |

Kurven (10) und (11) in Abb. 3.

## Beispiel 3

In einer Konzentriereinheit nach PAULING wurden nacheinander drei Gußkessel in der üblichen Weise betrieben. Lediglich der dritte wies die erfindungsgemäße Heizgasführung auf. Die Vermessung der Rillentiefen führte zu folgenden Werten:

| | | | | | |
|---|---|---|---|---|---|
| übliche RGF | Laufzeit | 113 | 163 | 286 | 374 Tage |
| | Rillentiefe | 19 | 22 | 23 | 31 mm |
| übliche RGF | Laufzeit | 265 Tage | | | |
| | Rillentiefe | 60 mm | | | |
| verbesserte RGF | Laufzeit | | 288 | 461 Tage | |
| | Rillentiefe | | 6 | 7 mm | |

RGF = Rauchgasführung

Der letzte Kessel wird noch betrieben.
Die Werte entsprechen den Kurven 12 bis 14 in Abb. 3.

## Patentansprüche

1. Verfahren zur Verminderung der Korrosion an Pauling-Kesseln, dadurch gekennzeichnet, daß der Kessel im Bereich seines Auflageflansches gleichmäßig beheizt wird.
2. Verfahren nach Anspruch 1, dadurch gekennzeichnet, daß der Kessel so beheizt wird, daß die Temperatur der Kesselwand oberhalb des Auflageflansches und die Temperatur der Kesselwand unterhalb des Auflageflansches möglichst gleich sind.
3. Verfahren nach Anspruch 1 oder 2, dadurch gekennzeichnet, daß die Heizgase mittels geeigneter Einbauten so geführt werden, daß sie direkt auf die Kesselwand zwischen Auflageflansch und Deckelflansch in ihrem gesamten Bereich auftreffen.

## Claims

1. Process for reducing the corrosion of Pauling boilers, characterised in that the boiler is heated uniformly in the region of its support flange.
2. Process according to Claim 1, characterised in that the boiler is heated in such a way that the respective temperatures of the boiler wall above and below the support flange are as equal as possible.
3. Process according to Claim 1 or 2, characterised in that the heating gases are guided by suitable fittings in such a way that they meet directly the entirety of the boiler wall between the support flange and the cover flange of the boiler.

## Revendications

1. Procédé pour diminuer la corrosion dans les chaudières Pauling, caractérisé en ce que la chaudière est chauffée d'une manière uniforme dans la région de son collet d'appui.
2. Procédé suivant la revendication 1, caractérisé en ce que la chaudière est chauffée de telle manière que la température de sa paroi située au-dessus du collet d'appui et la température de sa paroi située au-dessous de ce collet soient égales entre elles au possible.
3. Procédé suivant la revendication 1 ou 2, caractérisé en ce que les gaz de chauffage ou de fumée sont dirigés, au moyen de pièces intérieures rapportées convenables, de telle manière qu'ils rencontrent directement la paroi de la chaudière dans toute l'étendue de cette paroi comprise entre le collet d'appui et la bride de couvercle.

FIG. 1

T1

1

3

4

5

T2

2

FIG. 2

6

7

b

7

a

6

FIG. 3

A

80

70

60

50

40

30

20

10

0

13  10

8

12

9

11  14

0  4  8  12  16  20  24  28  B